# EUROPEAN PATENT SPECIFICATION

(11) **EP 2 978 283 B1**
(45) Date of publication and mention of the grant of the patent: **04.09.2019**
(21) Application number: 15177850.3
(22) Date of filing: 22.07.2015
(51) Int. Cl.: H05B 37/02

(54) **ILLUMINATION APPARATUS AND CONTROLLING METHOD THEREOF**
BELEUCHTUNGSVORRICHTUNG UND STEUERUNGSVERFAHREN DAFÜR
APPAREIL D'ÉCLAIRAGE ET PROCÉDÉ DE COMMANDE CORRESPONDANT

(30) Priority: 23.07.2014 KR 20140092960
(43) Date of publication of application: 27.01.2016
(73) Proprietor: LG Electronics Inc., Yeongdeungpo-gu Seoul 150-721 (KR)
(72) Inventor: NOH, Seunghyup, Seoul 153-802 (KR); RA, Inhwan, Seoul 153-802 (KR); LEE, Jaemyoung, Seoul 153-802 (KR)
(74) Representative: Vossius & Partner Patentanwälte Rechtsanwälte mbB

(56) References cited:
- GB-A- 2 487 585
- US-A1- 2003 161 145
- US-A1- 2006 291 212

## Description

The present disclosure relates to an illumination apparatus controlled by an application, and a controlling method thereof.

As communication technology and internet technology have rapidly developed the cellphone has become a necessity. Smartphones were obtained by adding functions supported by computers to the cellphone, such as internet communication and information search. Smartphone users are rapidly increasing.

The smart phones enable programs called applications to be installed implement various convenient functions. In addition, applications having various functions are being provided for free or at low cost through the internet.

It is possible to communicate with illumination apparatuses and other consumer electronics devices by using smart phone applications. It is also possible to control illumination apparatuses by using such applications.

US 2006/291212 A1 discloses sensing vibration / sound of one instrument to control wirelessly LEDs on other instruments or elsewhere.

GB 2487585 A discloses remote control of lighting by tapping, knocking, striking or vibrating a mobile phone. Recording or streaming light patterns responsive to such inputs is possible.

US 2003/161145 A1 discloses a LED candle on a 'blow to turn OFF' birthday card.

The invention is defined in the claims. Embodiments provide an Illumination apparatus and method of controlling an illumination apparatus, terminal for communicating with an illumination device and wireless lighting system.

According to one embodiment of the present invention, An illumination apparatus comprises: a light emission unit to emit light; a communication module to receive a control signal to a control unit; and a control unit to extinguish or modify the luminosity of the light emitted based on the control signal received from the communication module, wherein the control signal is based on measuring a sound intensity of a sound input to a terminal device separate from the illumination apparatus, wherein when the control signal indicates that the sound intensity is increased the control unit controls the luminosity of the light emitted to decrease, wherein when the control signal indicates that the sound intensity is below a lower-limit value the control unit controls the luminosity of the light emitted to be at a maximum level, and wherein when the control signal indicates that the sound intensity is above an upper-limit value the control unit controls the luminosity of the light emitted to be extinguished.

When the control signal indicates that the sound intensity is decreased, the control unit may control the luminosity of the light emitted to increase.

If a preset time elapses after the luminosity is extinguished, the control unit may cause the light emission unit to be re-lit and emit light.

The terminal device may be a smartphone and the control signal may be generated based on an application that is loaded in a terminal.

The sound input may be generated by a sound reception unit of the terminal device based on air blown to the sound reception unit, the luminosity may be based on a value corresponding to the sound intensity, and the sound intensity may be based on a measurement of decibel values for a plurality of sampling sections of the sound input, wherein the plurality of sampling sections are defined with specified time periods.

The sound intensity may be an average of the decibel values of the plurality of sampling sections.

When the control signal indicates that the sound intensity is below a lower-limit value, the control unit may control the luminosity of the light emitted to be maintained at a previous level.

When the control signal indicates that the sound intensity is below a lower-limit value, the control unit may control the luminosity of the light emitted to be extinguished or to remain extinguished.

When the control signal indicates that the sound intensity is above an upper-limit value, the control unit may control the luminosity of the light emitted to be at a maximum level or to maintain a maximum level.

According to another embodiment of the present invention, a method of controlling an illumination apparatus, comprises: receiving, by a communication module, a control signal, controlling, by a control unit, a luminosity based on the control signal, emitting light, by a light emission unit, based on the luminosity, wherein the control signal is determined by brightness values stored in a memory corresponding to a measured sound intensity of a sound input generated by air blown into a terminal device, measured in decibels, wherein when the control signal indicates that the sound intensity is increased the control unit controls the luminosity of the light emitted to decrease, wherein when the control signal indicates that the sound intensity is below a lower-limit value the control unit controls the luminosity of the light emitted to be at a maximum level, and wherein when the control signal indicates that the sound intensity is above an upper-limit value the control unit controls the luminosity of the light emitted to be extinguished.

The sound intensity may be based on a measurement of decibel values for a plurality of sampling sections of the sound input, wherein the plurality of sampling sections are defined with specified time periods.

The sound intensity may be an average of the decibel values of the plurality of sampling sections.

The details of one or more embodiments are set forth in the accompanying drawings and the description below. Other features will be apparent from the description and drawings, and from the claims.
Fig. 1 is a system diagram showing a configuration for the control of an illumination apparatus according to a first embodiment.
Fig. 2 shows control block diagrams of the illumination apparatus and a terminal.
Figs. 3 and 4 are diagrams for explaining the display of an illumination control application as an example of the inventive concept.
Fig. 5 is a flowchart of an illumination control method according to a first embodiment.
Fig. 6 is a flowchart of an illumination control method according to a second embodiment.
Fig. 7 is a flowchart of an illumination control method according to a third embodiment.
Fig. 8 is a flowchart of an illumination control method according to a fourth embodiment.

Reference will now be made in detail to the embodiments of the present disclosure, examples of which are illustrated in the accompanying drawings.

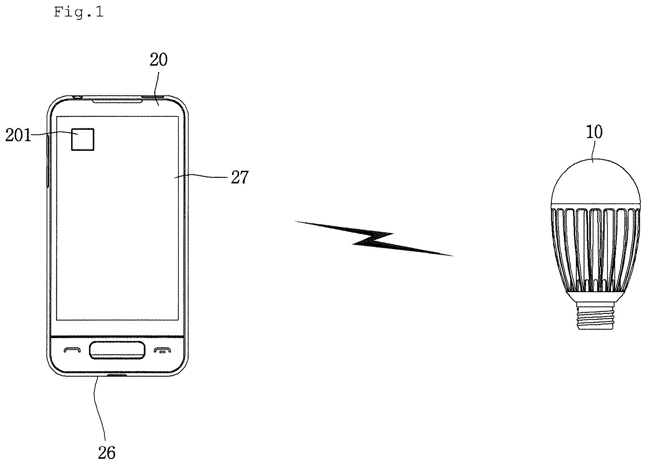

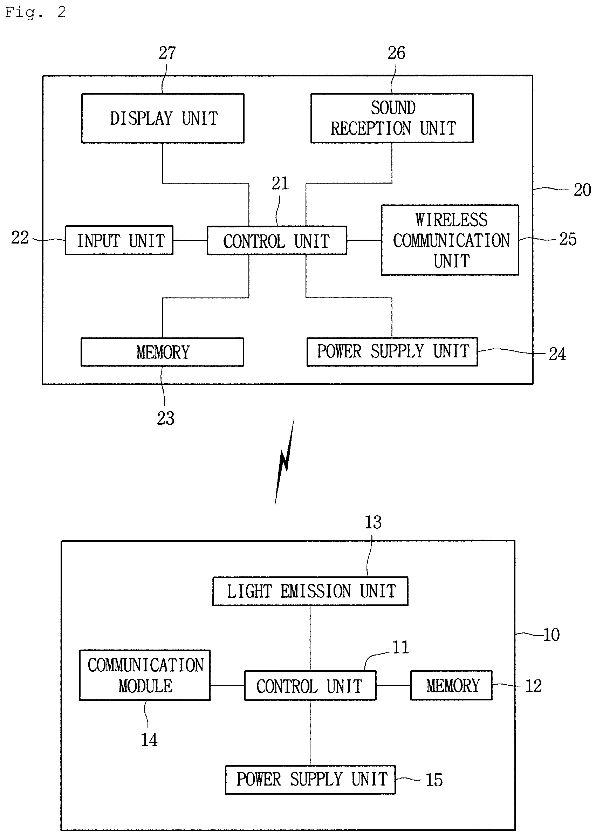

Fig. 1 is a system diagram showing a configuration for the control of an illumination apparatus according to a first embodiment, and Fig. 2 is a control block diagram of configurations making up a control system of the illumination apparatus.

Referring to Figs. 1 and 2, the control system of the illumination apparatus according to one embodiment includes an illumination apparatus 10, and a terminal 20 into which an application for the control of the illumination apparatus 10 is loaded.

The terminal 20 may transmit and receive commands or data to and from the illumination apparatus 10 through a wireless communication network. The wireless communication network may use various mobile communication standards such as Bluetooth, WiFi, 3G, LTE or WiMax series.

The illumination apparatus 10 may include a control unit 11, a memory 12, a light emission unit 13, a communication module 14, and a power supply unit 15. Also, the illumination apparatus 10 may include a light emitting diode (LED).

The communication module 14 may include a wired communication module such as power line communication (PLC) enabling internet communication or a wireless communication module such as WiFi. Also, the communication module 14 may play roles in receiving a control signal from the terminal 20 and then transmitting it to the control unit 11.

The control unit 11 controls the brightness of the illumination apparatus 10 according to a signal transmitted from the communication module 14.

Many methods may be used for the brightness control of the illumination apparatus 10. As examples, there may be a pulse width modulation (PWM) dimming (adjusting an amount of current by modulating the width of a frequency), a 0-10 method (controlling an LED by changing the voltage of a control line from 0 V to 10 V), and a triode alternating current switch (TRIAC) (adjusting with a general dimmer).

The terminal 20 may be a portable terminal. As a particular example, it may be a smart phone or tablet computer. The terminal 20 may have any of various structures according to type and necessity.

The terminal 20 may also include a control unit 21, an input unit 22, a memory 23, a power supply unit 24, a wireless communication unit 25, a sound reception unit 26, and a display unit 27.

In particular, the input unit 22 may include a touch type button that inputs a command by touch of the display unit 27.

In the memory 23 may be stored an operating system (OS) and various application programs such as application 201. The application 201 indicates a computer program that is installed and executed in the terminal. The application 201 may be downloaded to the terminal from another computer device such as a personal computer or from an external server through the internet network, and subsequently installed.

The power supply unit 24 supplies power to the terminal 20. It may include a wireless power supply unit such as a non-rechargeable first battery or a rechargeable secondary battery, and a wired power supply unit.

Also, the application 201 receives an illumination control mode from a user, collects control information according to the received illumination control mode and transmits a control signal according to the collected control information to the illumination apparatus 10.

The sound reception unit 26 may be installed at one side of the terminal 20, and may receive voice or other sound and transmit information on the received voice or sound to the control unit 21.

In addition, the wireless communication unit 25 may be a communication module that may communicate through a wireless communication network or with the internet.

The terminal 20 may further comprise a sound output unit. The sound output unit may include a speaker and may output a signal from the application 201.

According to an illumination control system having such a configuration, a user may execute the application 201 to control the illumination apparatus 10 and input a control command for the illumination apparatus 10 through the application 201.

Then, the input control command is transmitted to the communication module 14 through a wireless communication network.

Also, the control command received through the communication module 14 is transmitted to the control unit 11 of the illumination apparatus 10. The control unit 11 controls the operation of the illumination apparatus 13 according to the received control command.

Also, the control unit 11 of the illumination apparatus 10 may transmit operation state information on the light emission unit 13 in a wired or wireless manner through the communication module 14. The information transmitted through the communication module 14 of the illumination apparatus 10 is received by the wireless communication unit 25 of the terminal 20.

Also, the information transmitted to the wireless communication unit 25 may be displayed on the display unit 27 by the control unit 21 of the terminal 20.

Several condition settings are required so that illumination control is performed through the application 201 installed in the terminal 20.

To this end, an application 201 main screen is first activated by the touch of the application 201 displayed on the display unit 27. In addition, login into the application 201 is performed through an ID and password inputs. Alternatively, is also possible to perform a job on the application 201 without a separate login.

In order to use the application 201, a job is performed that designates the illumination apparatus 10 to communicate with the application 201. That is, the job pairs the terminal 20 of a user and a corresponding illumination apparatus 10. This is performed so that an illumination control command through the application 201 is transmitted to the communication module 14 of the corresponding illumination apparatus 10 through a communication network.

In addition, the application 201 may be paired with a plurality of illumination devices 10. Thus, a user may register the plurality of illumination apparatuses 10 indoors with the application 201. When the plurality of illumination apparatuses 10 are registered, it is possible to activate the application 201, click a number of the illumination apparatuses 10 on a window and then control the luminosity of a corresponding illumination apparatus 10. In this example, the luminosity is a unit representing an amount of light irradiated from a light source and may be construed as a brightness of a light source. The present disclosure uses luminosity and brightness interchangeably.

The application 201 may be controlled by using wireless communication. Also, the application 201 may include a time control function for controlling a time at which and during which the illumination apparatus 10 is lit, a notification function for intermittently emitting light from the illumination apparatus 10 when the terminal 20 receives a call, and a function for controlling the brightness of the illumination apparatus 10 when a user shakes the terminal 20.

A user may control brightness by a sound input instead of by inputting directly through the application 201. In the following, such a function is referred to as 'illumination control by the intensity of sound' and may be performed by a mode change of the application 201.

In the following, an 'illumination control mode by the intensity of the sound' (hereinafter referred to as the 'candlelight mode') is described.

First, a user sets the state of the application 201 to the candlelight mode. Next, the user inputs sound through the sound reception unit 26. The user may input wind sound through blowing as well as music sound, voice sound, or natural sound through the sound reception unit 26.

The application 201 may analyze the intensity of the sound received by the sound reception unit 26.

The intensity of the sound is determined according to the amplitude of sound and may be generally represented in decibels (dB). The terminal 20 measures the intensity of the input sound and may convert the intensity to dB for processing by the application 201. Thus, the application 201 receives dB information on the sound measured by the terminal 20.

The application 201 may use sound sampling as one of the methods of analyzing the intensity of sound.

The application 201 may analyze sound input for a preset sampling section when sound sampling is performed, and then control the luminosity of the illumination apparatus 10 according to the intensity of sound sampled in each section.

The application 201 may use dB values measured in a plurality of sampling sections to calculate a single dB value. Thus, it is possible to remove noise from sound measured in the plurality of sampling sections and to extract a continuous and meaningful dB value.

As one of the methods of calculating a single dB value in the plurality of sampling sections, the application 201 takes an average value of dB values measured in the plurality of sampling sections, respectively. For example, it is possible to calculate a single value in the plurality of sampling sections by defining a single sampling section as 50 ms and taking an average value of five sections. In this case, when there is a sound input in a single sampling section but there are no sound inputs before and after it, it is determined that a corresponding input is an unspecific disturbance or device error and it is possible to consider that there is no sound input.

As one of the methods of calculating a single dB value in the plurality of sampling sections, the application 201 selects one of the dB values measured in the plurality of sampling sections, respectively. For example, it is possible to the greatest of the dB values of sound measured in the plurality of sampling sections, the smallest thereof, or a dB value that is preferentially measured.

Next, the application 201 uses the intensity of sound transmitted to and calculated by the sound reception unit 26 to generate a control signal for controlling the illumination apparatus 10.

The control signal may be determined by data stored in the memory 23 of the terminal 20. In particular, a brightness value corresponding to the dB value of sound measured may be stored in the memory 23 of the terminal 20.

In particular, the brightness of the illumination apparatus 10 is set to become darker as the dB value of the sound measured becomes higher. For example, the application 201 may enable the illumination apparatus 10 to maintain maximum brightness when the level of an input dB is equal to or lower than 20 dB, and when the level of the input dB exceeds 20 dB and is equal to or lower than 25 dB, the illumination apparatus may be set to have 90% of maximum luminosity. In addition, when the level of the measured dB is equal to or higher than 80 dB, the illumination apparatus may be set so that the brightness is extinguished.

A control signal that enables the illumination apparatus 10 to have a specific brightness value may be transmitted to the illumination apparatus 10 through the wireless communication unit 25 of the terminal 20. The communication module 14 of the illumination apparatus 10 may receive the control signal transmitted by the terminal 20.

The control unit 11 of the illumination apparatus 10 enables the light emission unit 13 to have a specific brightness value according to the transmitted control signal. The light emission unit 13 may be controlled in real time. That is, the illumination apparatus 10 may be controlled simultaneously with a voice input through the sound reception unit 26.

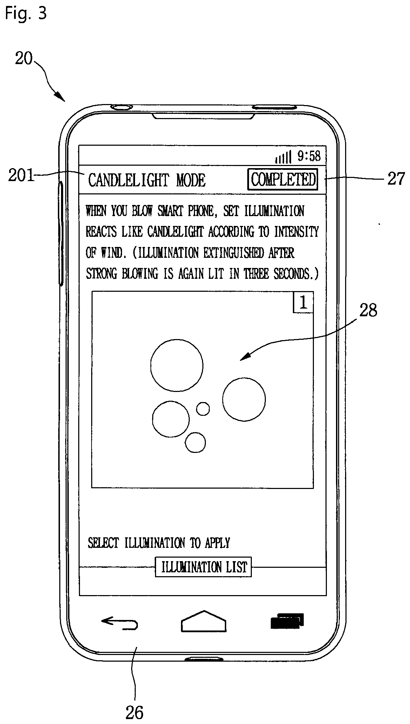

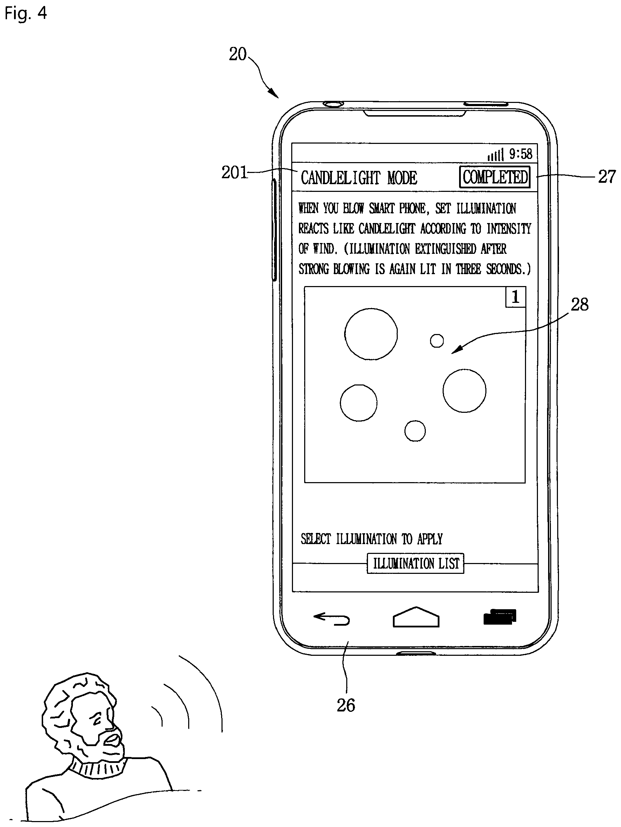

Figs. 3 and 4 are diagrams for explaining the display of an illumination control application of the inventive concept.

Fig. 3 shows a display state of the application 201 when there is no voice input to the terminal 20, and Fig. 4 shows a display state of the application 201 changes when sound is input to the terminal 20.

Referring to Figs. 3 and 4, the application 201 may generate a visual effect simultaneously with a brightness of the illumination apparatus 10 controlled by the sound input to the terminal 20. That is, a user may control the brightness of the illumination apparatus with the help of a graphic image 28 on a screen of the application 201 activated on the display unit 27.

In particular, when there is no sound input, the graphic image 28 comprises a plurality of circles gathered and displayed on the screen of the application 201 (see Fig. 3). If sound is input to the terminal 20, an animation is implemented in which the plurality of circles on the screen of the application 201 disperse in all directions according to the intensity of sound input simultaneously with the control of the luminosity of the illumination apparatus 10. The implementation of the animation provides an advantage in that control of the luminosity of the illumination apparatus 10 is visually shown to a user in real time.

Also, it is possible to implement different animations according to the intensity of the input sound. In particular, it is possible to implement an animation in which the plurality of circles that make up the graphic image 28 disperse farther away from each other as the intensity of the sound input to the sound reception unit 26 becomes greater.

Animation of the graphic image 28 may be implemented by various methods. For example, the graphic image 28 may become darker as the intensity of the sound input through the sound reception unit 26 become greater.

There may be various methods of controlling the luminosity of the illumination apparatus 10 according to the sound input to the terminal 20. In the following, control methods according to various embodiments are described in detail with reference to flowcharts on the assumption that the application 201 is set to the 'illumination control mode by the intensity of the sound'.

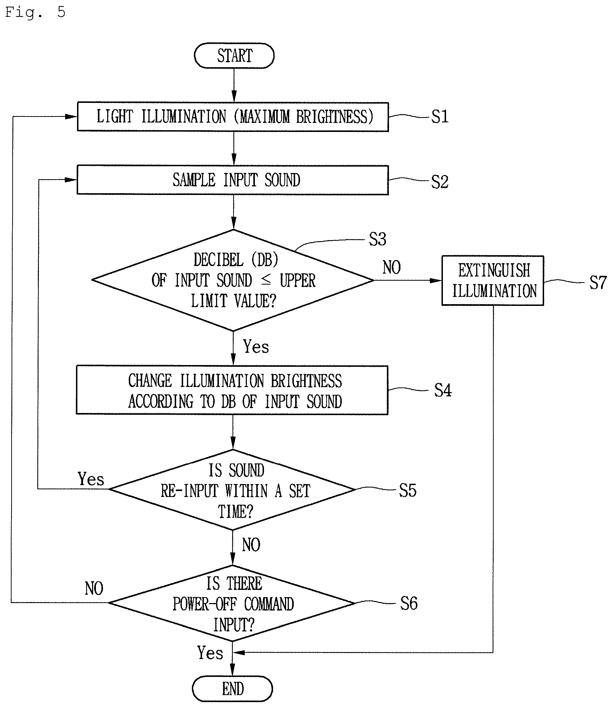

Fig. 5 is a flowchart of an illumination control method according to a first embodiment.

Referring to Fig. 5, the luminosity of the illumination apparatus 10 is first controlled in a state in which the illumination apparatus 10 has been lit to maximum brightness, in step S1.

Next, the terminal 20 samples sound input through the sound reception unit 26 in step S2. In this case, a single dB value may be determined by using a method, such as taking an average value in a plurality of sampling sections.

Next, it is determined whether the dB value of the input sound is equal to or lower than an upper limit value for illumination extinguishment in step S3.

When as a result of the determination in step S3, the dB value of the input sound exceeds the upper limit value for illumination extinguishment, the application 201 transmits a control signal for illumination extinguishment to the communication module 14 through the wireless communication unit 25. In this case, the control unit 11 enables the light emission unit 13 to be extinguished according to an extinguishment signal in step S7.

On the contrary, when as a result of the determination in step S3, the dB value of the input sound is lower than or equal to the upper limit value for illumination extinguishment, the application 201 transmits an illumination luminosity signal according to the dB value of the input sound to the communication module 14 through the wireless communication unit 25. In this case, the control unit 11 changes the luminosity of the light emission unit 13 according to the illumination luminosity signal in step S4.

In step S4, a time at which the luminosity of the illumination apparatus 10 is adjusted corresponds to a time at which the sound input to the terminal 20 is sampled. In particular, the illumination apparatus 10 may be controlled to sustain luminosity corresponding to the average value of dBs in a plurality of sampling sections for the same amount of time as the plurality of sampling sections.

For example, when a single sampling section is defined as 50 ms and the average dB value of five sections is taken, the illumination apparatus 10 may be controlled to sustain luminosity corresponding to the average dB value for 250 ms (= 5*50 ms).

The luminosity of the illumination apparatus 10 is controlled to decrease as the dB value becomes higher. When the input dB value is lower than a certain value, the illumination apparatus 10 may be controlled to maintain the previous brightness.

Next, the terminal 20 continues to receive a sound input in step S5. In this case, when sound is input, the terminal continues to sample the input sound in step S2, and when there is no sound input, it is determined whether there is a power-off command input for the illumination apparatus 10 in step S6.

When as a result of the determination in step S6, it is determined that there is no power-off command input, the illumination apparatus 10 is again lit to maximum brightness. When it is determined that the power-off command is input, power is turned off and illumination control ends.

According to an illumination control method according to an embodiment, the luminosity of the illumination apparatus 10 may be controlled according to the level of the input dB value and a time during which the sound was input. Also, when a sound equal to or higher than the upper limit value is input and the illumination apparatus 10 is off, an off state is maintained. When there is no additional sound input while luminosity has been adjusted as a result of an input of sound smaller than the upper limit value, the luminosity may be changed back to maximum value to imitate the motion of a typical candlelight.

In the following, a second embodiment is described with a flowchart. When sound equal to or higher than the upper limit value is input to the sound reception unit 26, and thus the illumination apparatus 10 is extinguished and a preset time elapses, the illumination apparatus 10 is automatically re-lit. The descriptions and reference numerals of the first embodiment are used for other parts that are the same as those of the first embodiment and repetitive descriptions are omitted.

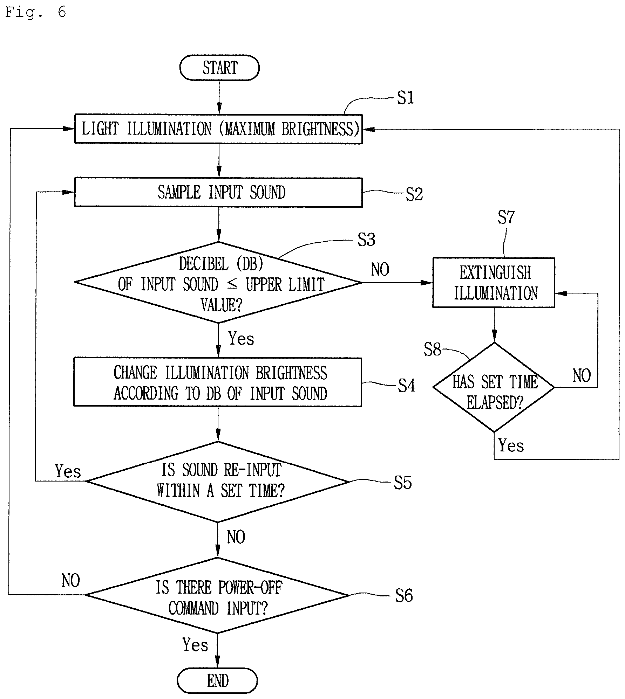

Fig. 6 is a flowchart of an illumination control method according to a second embodiment.

When as a result of the determination in step S3, the input dB value exceeds the upper limit value for illumination extinguishment, the application 201 transmits a control signal for illumination extinguishment to the communication module 14 through the wireless communication unit 25. In addition, the illumination apparatus 10 is extinguished according to an extinguishment signal in step S7.

Next, it is determined whether a preset time has elapsed in step S8. Before the preset time elapses, the illumination apparatus 10 maintains an extinguishment state and after the present time elapses, the illumination apparatus 10 is again lit to maximum brightness.

Other steps excluding those described above are the same as those of the first embodiment.

In the following, a third embodiment in which the luminosity of the illumination apparatus 10 changes with a sound input to the terminal 20, afterwhich the changed luminosity is maintained even though the sound input stops is described with reference to a flowchart.

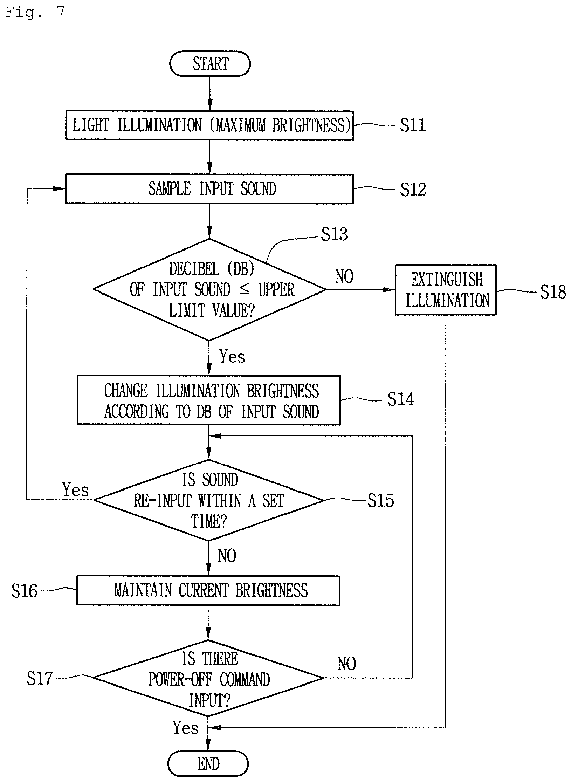

Fig. 7 is a flowchart of an illumination control method according to a third embodiment.

The illumination apparatus 10 is first lit to maximum brightness in step S11 and sound input through the sound reception unit 26 is sampled in step S12.

Next, it is determined whether the dB value of the input sound is equal to or lower than an upper limit value for illumination extinguishment in step S13.

When as a result of the determination in step S13, it is determined that the level of the input dB value exceeds the upper limit value for extinguishment, the application 201 transmits a control signal for illumination extinguishment to the communication module 14 through the wireless communication unit 25. In this case, the control unit 11 enables the light emission unit 13 to be extinguished according to an extinguishment signal in step S18.

On the contrary, when it is determined that the dB value of the input sound is lower or equal to the upper limit value for illumination extinguishment, the application 201 transmits an illumination luminosity signal according to the dB value of the input sound to the communication module 14 through the wireless communication unit 25. In addition, the control unit 11 changes the luminosity of the light emission unit 13 according to the illumination luminosity signal in step S14.

The luminosity of the illumination apparatus 10, which is based on the dB value of the sound input to the terminal 20, becomes darker as the dB value becomes higher, and when the input dB value is lower than a certain value, the luminosity of the illumination apparatus 10 may not change.

Next, the terminal 20 continues to receive a sound input in step S15. In this case, when a sound continues to be input into the terminal, the terminal continues to sample the input sound in step S12, and when there is no sound input, the current brightness is maintained in step S16.

Next, it is determined whether there is a power-off command input for the illumination apparatus 10 in step S17.

When as a result of the determination in step S17, it is determined that there is no power-off command input, the terminal 20 continues to receive a sound input while the illumination apparatus 10 maintains the previous luminosity, in step S15. On the contrary, when it is determined that the power-off command is input, power is turned off and illumination control ends.

According to the control method of the illumination apparatus 10 according to the present embodiment, the luminosity of the illumination apparatus 10 is controlled according to the input dB value. Also, when sound equal to or higher than the upper limit value is input and the illumination apparatus 10 is turned off, an off state is maintained. When there is no additional sound input value while sound smaller than the upper limit value is input and luminosity has been adjusted, illumination luminosity is continuously maintained.

In the following, a fourth embodiment in which the illumination apparatus 10 is again lit when a certain time elapses after illumination extinguishment is described with reference to a flowchart. The control method of the illumination apparatus 10 according to the fourth embodiment is different from the third embodiment only in terms of whether the illumination apparatus 10 is again lit after the sound equal to or higher than the upper limit value is input and the illumination apparatus 10 has been extinguished. The descriptions and reference numerals of the third embodiment are used for other parts that are the same as those of the third embodiment and repetitive descriptions are omitted.

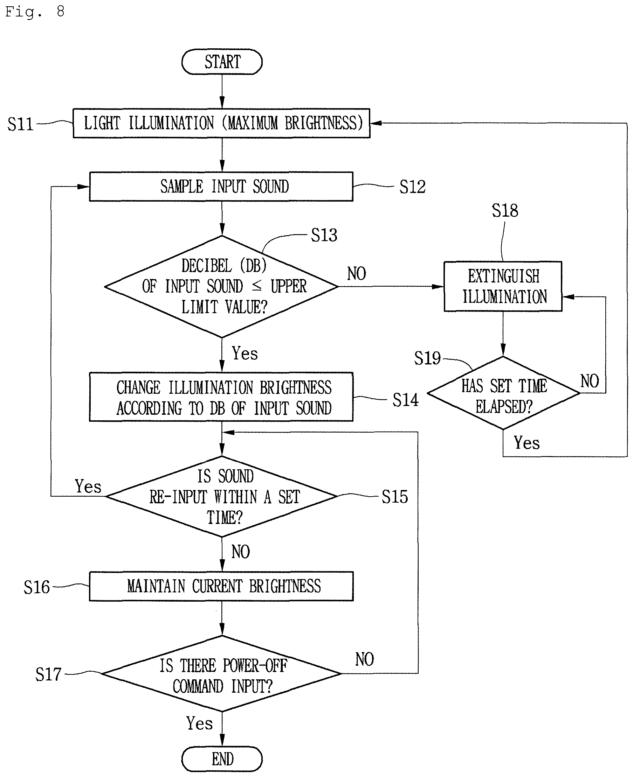

Fig. 8 is a flowchart of an illumination control method according to a fourth embodiment.

Referring to Fig. 8, when as a result of the determination in step S13, it is determined that the dB value of the input sound is equal to or higher than the upper limit value for illumination extinguishment, the application 201 transmits a control signal for illumination extinguishment to the communication module 14 through the wireless communication unit 25. In this case, the control unit 11 enables the illumination apparatus 10 to be extinguished according to an extinguishment signal in step S18.

Next, it is determined whether a preset time has elapsed in step S19. Before the preset time elapses, the illumination apparatus 10 maintains an extinguishment state and after the preset time elapses, the illumination apparatus 10 is again lit to maximum brightness.

The embodiments proposed are implemented by applying the characteristics of candlelight where luminosity varies according to the intensity of wind, to the illumination apparatus. When a user directly blows into a smart device or wind is sensed, it is possible to extinguish, light, or otherwise modify the luminosity of the illumination apparatus 10.

It is possible to provide analog illumination control through such an automated illumination control function and there is an advantage in that it is possible to perform various illumination controls accordingly.

## Claims

1. An illumination apparatus comprising:
a light emission unit (13) to emit light;
a communication module (14) to receive a control signal to control the light emission unit (13) from a terminal device (20); and
a control unit (11) to receive the control signal from the communication module (14) to extinguish or modify the luminosity of the light emitted based on the control signal received from the communication module (14),
wherein the control signal is based on measuring a sound intensity of sound input to the terminal device (20) separate from the illumination apparatus,
**characterized in that** when the control signal indicates that the sound intensity is increased, the control unit (11) controls the luminosity of the light emitted to decrease,
wherein when the control signal indicates that the sound intensity is below a lower-limit value, the control unit (11) controls the luminosity of the light emitted to be at a maximum level, and
wherein when the control signal indicates that the sound intensity is above an upper-limit value, the control unit (11) controls the luminosity of the light emitted to be extinguished.

2. The illumination apparatus of claim 1, wherein when the control signal indicates that the sound intensity is decreased, the control unit (11) controls the luminosity of the light emitted to increase.

3. The illumination apparatus of claim 1, wherein, if a preset time elapses after the luminosity is extinguished, the control unit (11) causes the light emission unit to be re-lit and emit light.

4. A combination of the illumination apparatus of any one of claims 1 to 3 and the terminal device (20), wherein the terminal device (20) is a smartphone and the control signal is generated based on an application (201) that is loaded in the terminal device (20).

5. A combination of the illumination apparatus of any one of claims 1 to 3 and the terminal device (20), or the combination according to claim 4, wherein
the sound input is generated by a sound reception unit (26) of the terminal device (20) based on air blown to the sound reception unit,
the luminosity is based on a value corresponding to the sound intensity, and
the sound intensity is based on a measurement of decibel values for a plurality of sampling sections of the sound input, wherein the plurality of sampling sections are defined with specified time periods.

6. The combination of claim 5, wherein the sound intensity is an average of the decibel values of the plurality of sampling sections.

7. The illumination apparatus of claim 1, wherein when the control signal indicates that the sound intensity is below a lower-limit value, the control unit (11) controls the luminosity of the light emitted to be maintained at a previous level.

8. A method of controlling an illumination apparatus, comprising:
receiving, by a communication module (14), a control signal,
controlling, by a control unit (11), a luminosity based on the control signal,
emitting light, by a light emission unit (13), based on the luminosity,
wherein the control signal is determined by brightness values stored in a memory (23), corresponding to a measured sound intensity of a sound input generated by air blown into a terminal device (20), measured in decibels,
**characterized in that** when the control signal indicates that the sound intensity is increased, the control unit (11) controls the luminosity of the light emitted to decrease,
wherein when the control signal indicates that the sound intensity is below a lower-limit value, the control unit (11) controls the luminosity of the light emitted to be at a maximum level, and
wherein when the control signal indicates that the sound intensity is above an upper-limit value, the control unit (11) controls the luminosity of the light emitted to be extinguished.

9. The method of claim 8, wherein the sound intensity is based on a measurement of decibel values for a plurality of sampling sections of the sound input, wherein the plurality of sampling sections are defined with specified time periods.

10. The method of claim 9, wherein the sound intensity is an average of the decibel values of the plurality of sampling sections.

## Patentansprüche

1. Beleuchtungsvorrichtung mit:
einer Lichtemissionseinheit (13) zum Emittieren von Licht;
einem Kommunikationsmodul (14) zum Empfangen eines Steuersignals zum Steuern der Lichtemissionseinheit (13) von einem Endgerät (20); und
einer Steuereinheit (11) zum Empfangen des Steuersignals vom Kommunikationsmodul (14), um die Leuchtstärke des emittierten Lichts basierend auf dem vom Kommunikationsmodul (14) empfangenen Steuersignal auf null zu setzen oder zu modifizieren,
wobei das Steuersignal auf einer Messung einer Tonintensität eines Toneingangssignals des Endgeräts (20) basiert, das von der Beleuchtungsvorrichtung getrennt ist,
**dadurch gekennzeichnet, dass**,
wenn das Steuersignal anzeigt, dass die Tonintensität zunimmt, die Steuereinheit (11) die Leuchtstärke des emittierten Lichts derart steuert, dass sie abnimmt,
wobei, wenn das Steuersignal anzeigt, dass die Tonintensität unterhalb eines unteren Grenzwertes liegt, die Steuereinheit (11) die Leuchtstärke des emittierten Lichts derart steuert, dass sie einen maximalen Pegel annimmt, und
wobei, wenn das Steuersignal anzeigt, dass die Tonintensität oberhalb eines oberen Grenzwertes liegt, die Steuereinheit (11) die Leuchtstärke des emittierten Lichts derart steuert, dass sie auf null gesetzt wird.

2. Beleuchtungsvorrichtung nach Anspruch 1, wobei, wenn das Steuersignal anzeigt, dass die Tonintensität abnimmt, die Steuereinheit (11) die Leuchtstärke des emittierten Lichts derart steuert, dass sie zunimmt.

3. Beleuchtungsvorrichtung nach Anspruch 1, wobei, wenn eine voreingestellte Zeit verstrichen ist, nachdem die Leuchtstärke auf null gesetzt wurde, die Steuereinheit (11) veranlasst, dass die Lichtemissionseinheit erneut aktiviert wird und Licht emittiert.

4. Kombination aus der Beleuchtungsvorrichtung nach einem der Ansprüche 1 bis 3 und dem Endgerät (20), wobei das Endgerät (20) ein Smartphone ist und das Steuersignal basierend auf einer Anwendung (201) erzeugt wird, die in das Endgerät (20) geladen ist.

5. Kombination aus der Beleuchtungsvorrichtung nach einem der Ansprüche 1 bis 3 und dem Endgerät (20) oder Kombination nach Anspruch 4, wobei
das Toneingangssignal durch eine Tonempfangseinheit (26) des Endgeräts (20) basierend auf Luft erzeugt wird, die zur Tonempfangseinheit geblasen wird,
die Leuchtstärke auf einem der Tonintensität entsprechenden Wert basiert, und
die Tonintensität auf einer Messung von Dezibelwerten für mehrere Sampling-Abschnitte des Toneingangssignals basiert, wobei die mehreren Sampling-Abschnitte durch spezifizierte Zeitperioden definiert sind.

6. Kombination nach Anspruch 5, wobei die Tonintensität ein Mittelwert der Dezibelwerte der mehreren Sampling-Abschnitte ist.

7. Beleuchtungsvorrichtung nach Anspruch 1, wobei, wenn das Steuersignal anzeigt, dass die Tonintensität unterhalb eines unteren Grenzwertes liegt, die Steuereinheit (11) die Leuchtstärke des emittierten Lichts derart steuert, dass sie auf einem vorherigen Pegel gehalten wird.

8. Verfahren zum Steuern einer Beleuchtungsvorrichtung, mit den Schritten:
Empfangen eines Steuersignals durch ein Kommunikationsmodul (14);
Steuern einer auf dem Steuersignal basierenden Leuchtstärke durch eine Steuereinheit (11);
Emittieren von Licht durch eine Lichtemissionseinheit (13) basierend auf der Leuchtstärke,
wobei das Steuersignal durch Helligkeitswerte bestimmt ist, die in einem Speicher (23) gespeichert sind und einer gemessenen Tonintensität eines Toneingangssignals gemessen in Dezibel entsprechen, das durch Luft erzeugt wird, die in ein Endgerät (20) geblasen wird,
**dadurch gekennzeichnet, dass**,
wenn das Steuersignal anzeigt, dass die Tonintensität zunimmt, die Steuereinheit (11) die Leuchtstärke des emittierten Lichts derart steuert, dass sie abnimmt,
wobei, wenn das Steuersignal anzeigt, dass die Tonintensität unterhalb eines unteren Grenzwertes liegt, die Steuereinheit (11) die Leuchtstärke des emittierten Lichts derart steuert, dass sie einen maximalen Pegel aufweist, und
wobei, wenn das Steuersignal anzeigt, dass die Tonintensität oberhalb eines oberen Grenzwertes liegt, die Steuereinheit (11) die Leuchtstärke des emittierten Lichts derart steuert, dass sie auf null gesetzt wird.

9. Verfahren nach Anspruch 8, wobei die Tonintensität auf einer Messung von Dezibelwerten für mehrere Sampling-Abschnitte des Toneingangssignals basiert, wobei die mehreren Sampling-Abschnitte durch spezifizierte Zeitperioden definiert sind.

10. Verfahren nach Anspruch 9, wobei die Tonintensität ein Mittelwert der Dezibelwerte der mehreren Sampling-Abschnitte ist.

## Revendications

1. Appareil d'éclairage comprenant :
une unité d'émission de lumière (13) pour émettre de la lumière ;
un module de communication (14) pour recevoir un signal de commande pour commander l'unité d'émission de lumière (13) depuis un dispositif terminal (20) ; et
une unité de commande (11) pour recevoir le signal de commande du module de communication (14) pour éteindre ou modifier la luminosité de la lumière émise sur la base du signal de commande reçu du module de communication (14),
dans lequel le signal de commande est fondé sur la mesure d'une intensité sonore d'une entrée sonore dans le dispositif terminal (20) séparé de l'appareil d'éclairage,
**caractérisé en ce que** lorsque le signal de commande indique que l'intensité sonore est augmentée, l'unité de commande (11) commande la luminosité de la lumière émise afin qu'elle diminue,
dans lequel lorsque le signal de commande indique que l'intensité sonore est inférieure à une valeur de limite inférieure, l'unité de commande (11) commande la luminosité de la lumière émise afin qu'elle soit à un niveau maximal, et
dans lequel lorsque le signal de commande indique que l'intensité sonore est supérieure à une valeur de limite supérieure, l'unité de commande (11) commande la luminosité de la lumière émise afin qu'elle soit éteinte.

2. Appareil d'éclairage selon la revendication 1, dans lequel lorsque le signal de commande indique que l'intensité sonore est diminuée, l'unité de commande (11) commande la luminosité de la lumière émise afin qu'elle augmente.

3. Appareil d'éclairage selon la revendication 1, dans lequel, si un temps prédéfini s'écoule après que la luminosité est éteinte, l'unité de commande (11) provoque le rééclairage de l'unité d'émission de lumière et son émission de lumière.

4. Combinaison de l'appareil d'éclairage selon l'une quelconque des revendications 1 à 3 et du dispositif terminal (20), dans laquelle le dispositif terminal (20) est un smartphone et le signal de commande est généré sur la base d'une application (201) qui est chargée dans le dispositif terminal (20).

5. Combinaison de l'appareil d'éclairage selon l'une quelconque des revendications 1 à 3 et du dispositif terminal (20), ou combinaison selon la revendication 4, dans laquelle
l'entrée sonore est générée par une unité de réception de son (26) du dispositif terminal (20) sur la base de l'air soufflé vers l'unité de réception de son,
la luminosité est fondée sur une valeur correspondant à l'intensité sonore, et l'intensité sonore est fondée sur une mesure de valeurs de décibel pour une pluralité de sections d'échantillonnage de l'entrée sonore, dans laquelle la pluralité de sections d'échantillonnage sont définies avec des périodes de temps spécifiées.

6. Combinaison selon la revendication 5, dans laquelle l'intensité sonore est une moyenne des valeurs de décibel de la pluralité de sections d'échantillonnage.

7. Appareil d'éclairage selon la revendication 1, dans lequel lorsque le signal de commande indique que l'intensité sonore est inférieure à une valeur de limite inférieure, l'unité de commande (11) commande la luminosité de la lumière émise afin qu'elle soit maintenue à un niveau précédent.

8. Procédé de commande d'un appareil d'éclairage, comprenant :
la réception, par un module de communication (14), d'un signal de commande,
la commande, par une unité de commande (11) d'une luminosité fondée sur le signal de commande,
l'émission de lumière, par une unité d'émission de lumière (13), fondée sur la luminosité,
dans lequel le signal de commande est déterminé par des valeurs de brillance stockées dans une mémoire (23), correspondant à une intensité sonore mesurée d'une entrée sonore générée par l'air soufflé dans un dispositif terminal (20), mesurée en décibels,
**caractérisé en ce que** lorsque le signal de commande indique que l'intensité sonore est augmentée, l'unité de commande (11) commande la luminosité de la lumière émise afin qu'elle diminue,
dans lequel lorsque le signal de commande indique que l'intensité sonore est inférieure à une valeur de limite inférieure, l'unité de commande (11) commande la luminosité de la lumière émise afin qu'elle soit à un niveau maximal, et
dans lequel lorsque le signal de commande indique que l'intensité sonore est supérieure à une valeur de limite supérieure, l'unité de commande (11) commande la luminosité de la lumière émise afin qu'elle soit éteinte.

9. Procédé selon la revendication 8, dans lequel l'intensité sonore est fondée sur une mesure de valeurs de décibel pour une pluralité de sections d'échantillonnage de l'entrée sonore, dans lequel la pluralité de sections d'échantillonnage sont définies avec des périodes de temps spécifiées.

10. Procédé selon la revendication 9, dans lequel l'intensité sonore est une moyenne des valeurs de décibel de la pluralité de sections d'échantillonnage.
